# EUROPÄISCHE PATENTSCHRIFT

(11) **EP 2 774 786 B1**
(45) Veröffentlichungstag und Bekanntmachung des Hinweises auf die Patenterteilung: **31.01.2018**
(21) Anmeldenummer: 14155037.6
(22) Anmeldetag: 13.02.2014
(51) Int. Cl.: B60G 7/00

(54) **Verfahren zur Herstellung eines Fahrwerkslenkers**
Method for producing a suspension arm
Procédé de fabrication d'un bras de suspension

(30) Priorität: 08.03.2013 DE 102013004014
(43) Veröffentlichungstag der Anmeldung: 10.09.2014
(73) Patentinhaber: AUDI AG, 85045 Ingolstadt (DE)
(72) Erfinder: Langhoff, Hans-Jürgen, 85101 Lenting (DE); Ottinger, Andreas, 86641 Rain (DE)

(56) Entgegenhaltungen:
- EP-A1- 2 455 244
- WO-A1-2006/046876
- JP-A- 2009 173 155
- JP-A- 2010 195 317
- US-A1- 2002 162 297
- US-A1- 2011 210 528

## Beschreibung

Die vorliegende Erfindung betrifft ein Verfahren zur Herstellung eines Fahrwerkslenkers für ein Fahrzeug, wobei der Fahrwerkslenker als einstückiges Umformbauteil aus einem Strangpressprofil hergestellt wird und die Verfahrensschritte Bereitstellen eines Halbzeugs aus einem Strangpressprofil mit einem Bodensteg, von dem ausgehend mindestens zwei Seitenstege unter Ausbildung eines dazwischenliegenden Freiraums abstehen, Einbringen mindestens einer Bearbeitungsöffnung in den Bodensteg zwischen den Seitenstegen in einem endständigen Lagerabschnitt des Fahrwerkslenkers, Zusammendrücken des Lagerabschnitts in Querrichtung des Fahrwerkslenkers und Einbringen von koaxial zueinander angeordneten Lageröffnungen in jeweils einen der Seitenstege des Lagerabschnitts, umfassen, sowie einen mit einem erfindungsgemäßen Verfahren hergestellten Fahrwerkslenker und ein Fahrzeug mit mindestens einem solchen Fahrwerkslenker.

Derartige Fahrwerkslenker, auch Querlenker oder einfach Lenker genannt, werden im Fahrzeugbau als Teil der Radaufhängung verwendet. Die Radaufhängung verbindet das Rad mit der Karosserie und führt es unter Gewährung bestimmter Freiheitsgrade. Zur schwenkbaren Befestigung des Fahrwerkslenkers an der Karosserie oder an einem Radträger ist dieser mit einem Lager zu versehen. Solche Fahrwerkslenker können aus umgeformten (Stahl-)Blechen oder aus (umgeformten) Strangpressprofilen, beispielsweise einem Aluminium-Strangpressprofil, erzeugt werden.

Die gattungsbildende EP 2 455 244 A1 offenbart ein Verfahren zur Herstellung eines Lenkerarms zur Anordnung an einer Kraftfahrzeugachse, wobei der Lenkerarm als einstückiges Umformbauteil aus einem Leichtmetallstrangpressprofil hergestellt wird. Das Verfahren umfasst die Schritte Bereitstellen eines Halbzeuges aus einem Leichtmetallstrangpressprofil, welches eine Pi-förmige Querschnittskonfiguration mit einem Bodensteg und sich von dem Bodensteg erstreckenden Seitenstegen und gegenüber den Stegen abstehende Schenkel besitzt, Schneidetechnisches Bearbeiten des Halbzeuges, Einbringen von Lageraufnahmeöffnungen, Abschnittsweises Aufweiten des bearbeiteten Halbzeuges. Der Bodensteg weist im endständigen Bereich um die Lageraufnahmeöffnungen einen Freischnitt als Bearbeitungsöffnung auf, so dass in einem weiteren Verfahrensschritt ein lokales Zusammenpressen der Seitenstege zueinander erfolgen kann. Weiterhin wird ein Lenkerarm zur Anordnung an einer Kraftfahrzeugachse, welcher nach dem erfindungsgemäßen Verfahren hergestellt ist, beschrieben. Die DE 10 2008 047 015 A1 zeigt ein ähnliches Verfahren für ein Strangpressprofil mit geschlossenem Querschnittsprofil.

Nach einem Verfahren des Stands der Technik hergestellte Fahrwerkslenker weisen den Nachteil auf, dass durch die zur Umformung des endständigen Lagerabschnitts verfahrenstechnisch notwendige Bearbeitungsöffnung eine strukturelle Schwächung bezüglich Schubsteifigkeiten im Bauteil verbleibt, die bei bestimmungsgemäßer Verwendung des Fahrwerkslenkers in der Achsanordnung eines Fahrzeugs einen negativen Einfluss auf das Fahrverhalten ausübt.

Die gattungsbildende JP 2010 195317 A offenbart ein Verfahren zur Herstellung eines Fahrwerkslenkers für ein Fahrzeug, wobei der Fahrwerkslenker als einstückiges Umformbauteil aus einem Strangpressprofil hergestellt wird und die Verfahrensschritte Bereitstellen eines Halbzeugs aus einem Strangpressprofil mit einem Bodensteg, von dem ausgehend mindestens zwei Seitenstege unter Ausbildung eines dazwischenliegenden Freiraums abstehen, Einbringen mindestens einer nach einen Seite offenen Bearbeitungsöffnung in den Bodensteg zwischen den Seitenstegen in einem endständigen Lagerabschnitt des Fahrwerkslenkers, Zusammendrücken des Lagerabschnitts in Querrichtung des Fahrwerkslenkers und Einbringen von koaxial zueinander angeordneten Lageröffnungen in jeweils einen der Seitenstege des Lagerabschnitts, umfassen, sowie einen mit einem erfindungsgemäßen Verfahren hergestellten Fahrwerkslenker. Hier besteht jedoch der Nachteil, dass der Fahrwerkslenker gegenüber Scherbewegungen der beiderseits verbliebenen Bodenstege im Lagerabschnitt nicht besonders gut versteift ist.

Aufgabe der vorliegenden Erfindung ist es daher ein Verfahren zur Herstellung eines Fahrwerkslenkers und einen Fahrwerkslenker für ein Fahrzeug bereitzustellen, wobei ein Umformschritt mit weiter verringerten Steifigkeitsverlusten erzielt werden kann.

Diese Aufgabe wird durch die Merkmale des Patentanspruchs 1 gelöst.

Verfahren zur Herstellung eines Fahrwerkslenkers für ein Fahrzeug, wobei der Fahrwerkslenker als einstückiges Umformbauteil aus einem Strangpressprofil hergestellt wird, umfassend die nachfolgende Reihenfolge der Verfahrensschritte:
a) Bereitstellen eines Halbzeugs aus einem Strangpressprofil mit einem Bodensteg, von dem ausgehend mindestens zwei Seitenstege unter Ausbildung eines dazwischenliegenden Freiraums abstehen;
b) Einbringen mindestens einer Bearbeitungsöffnung in den Bodensteg zwischen den Seitenstegen in einem endständigen Lagerabschnitt des Fahrwerkslenkers, wobei mindestens eine der Bearbeitungsöffnungen radial rundum von dem Bodensteg umschlossen ist;
c) Zusammendrücken des Lagerabschnitts in Querrichtung des Fahrwerkslenkers bis sich mindestens eine der Bearbeitungsöffnungen zumindest abschnittsweise schließt;
d) Einbringen von koaxial zueinander angeordneten Lageröffnungen in jeweils einen der Seitenstege des Lagerabschnitts.

Indem die Bearbeitungsöffnung sich beim Zusammendrücken des Lagerabschnitts zumindest abschnittsweise schließt, erhält man einen Fahrwerkslenker aus einem Strangpressprofil, der bei nach wie vor günstiger Herstellung einen sehr stabilen Lagerabschnitt bezüglich Relativbewegungen aufweist. Durch die mindestens eine radial rundum von dem Bodensteg umschlossene Bearbeitungsöffnung wird der Bodensteg nicht derart geschwächt, dass eine Relativbewegung in Längsrichtung erfolgt. Bevorzugt können auch mehrere derartige Bearbeitungsöffnungen vorgesehen werden. Da in diesem Fall ein abschnittsweises Schließen der Bearbeitungsöffnung beim Zusammendrücken durch die dem verwendeten Material inhärenten Eigenschaften deutlich erschwert wird, soll auch das Verbleiben eines geringen Restspalts vorliegend unter den Schutzbereich dieses Patents fallen, da auch mit einer solchen Ausführungsform die erfindungsgemäßen Vorteile einer guten Schubsteifigkeit durch Reduzierung der Relativbewegungen erzielt werden können. Im übrigen sind zur Steifigkeitserhöhung keine weiteren Bauteile notwendig, so dass das Verfahren in gewohnter Geschwindigkeit und zu gleichen Kosten durchgeführt werden kann. Die gewonnene Schubsteifigkeit des Fahrwerkslenkers im Vergleich zu denen aus dem Stand der Technik bewirkt ein spürbar verbessertes Fahrverhalten. Selbstverständlich kann das beschriebene Verfahren auch noch weitere Verfahrensschritte aufweisen, die sich auf andere Teile des Fahrwerkslenkers beziehen, insbesondere weitere Freischnitte oder Umformvorgänge. Das Halbzeug kann beispielsweise eine U-förmige oder eine Pi-förmige Querschnittskonfiguration aufweisen oder durch einen weiteren Bodensteg als ein geschlossenes (Rechteck-)Profil ausgebildet sein. In diesem Fall wäre das Verfahren auf beide Bodenstege anzuwenden.

In einer bevorzugten Ausführung des Verfahrens werden mindestens eine der Bearbeitungsöffnungen und/oder die Lageröffnungen mit einem schneidtechnischen Bearbeitungsvorgang eingebracht. Als solches bietet sich beispielsweise ein Stanzvorgang oder ein Laserschneidprozess an.

In einer bevorzugten Ausführung des Verfahrens wird in einem sich an das Einbringen der Lageröffnungen anschließenden Verfahrensschritt eine Lagerhülse in die Lageröffnungen eingebracht, deren über die Seitenstege hinausstehenden Enden danach umgebördelt werden. Die rohrförmige Lagerhülse dient der Aufnahme eines Gummi-Metall-Lagers, welches für die Anbindung des Fahrwerkslenkers beispielsweise an die Fahrzeugkarosserie oder den Radträger notwendig ist. Die umgebördelten Enden verhindern zum Einen ein Verrutschen der Lagerhülse in den Lageröffnungen und zum Anderen stabilisieren sie den Lagerabschnitt durch den entstehenden Formschluss in Querrichtung.

Weitere Einzelheiten und Vorteile der Erfindung ergeben sich aus der nachstehenden Beschreibung eines bevorzugten Ausführungsbeispiels unter Bezugnahme auf die Zeichnungen.

Darin zeigen:
Fig. 1a eine isometrische Teilansicht des Halbzeugs für alle Ausführungsformen des Fahrwerkslenkers;
Fig. 1b eine isometrische Teilansicht einer ersten, nicht zur Erfindung gehörenden Ausführungsform des Fahrwerkslenkers nach Einbringen der Bearbeitungsöffnung;
Fig. 1c eine isometrische Teilansicht einer ersten, nicht zur Erfindung gehörenden Ausführungsform des Fahrwerkslenkers während des Zusammendrückens des Lagerabschnitts;
Fig. 1d eine isometrische Teilansicht einer ersten, nicht zur Erfindung gehörenden Ausführungsform des Fahrwerkslenkers nach Abschluss des Verfahrens;
Fig. 2a eine Draufsicht auf den Lagerabschnitt einer zweiten, nicht zur Erfindung gehörenden Ausführungsform des Fahrwerkslenkers nach Einbringen der Bearbeitungsöffnung;
Fig. 2b eine Draufsicht auf den Lagerabschnitt einer zweiten, nicht zur Erfindung gehörenden Ausführungsform des Fahrwerkslenkers während des Zusammendrückens des Lagerabschnitts;
Fig. 2c eine Draufsicht auf den Lagerabschnitt einer zweiten, nicht zur Erfindung gehörenden Ausführungsform des Fahrwerkslenkers nach Abschluss des Verfahrens;
Fig. 3a eine Draufsicht auf den Lagerabschnitt einer dritten, nicht zur Erfindung gehörenden Ausführungsform des Fahrwerkslenkers nach Einbringen der Bearbeitungsöffnung;
Fig. 3b eine Draufsicht auf den Lagerabschnitt einer dritten, nicht zur Erfindung gehörenden Ausführungsform des Fahrwerkslenkers während des Zusammendrückens des Lagerabschnitts;
Fig. 3c eine Draufsicht auf den Lagerabschnitt einer dritten, nicht zur Erfindung gehörenden Ausführungsform des Fahrwerkslenkers nach Abschluss des Verfahrens;
Fig. 3d eine Vorderansicht des Lagerabschnitts einer dritten, nicht zur Erfindung gehörenden Ausführungsform des Fahrwerkslenkers während des Zusammendrückens;
Fig. 3e eine Vorderansicht des Lagerabschnitts einer dritten, nicht zur Erfindung gehörenden Ausführungsform des Fahrwerkslenkers nach dem Zusammendrücken;
Fig. 4a eine Draufsicht auf den Lagerabschnitt einer vierten, erfindungsgemäßen Ausführungsform des Fahrwerkslenkers nach Einbringen der Bearbeitungsöffnungen;
Fig. 4b eine Draufsicht auf den Lagerabschnitt einer vierten, erfindungsgemäßen Ausführungsform des Fahrwerkslenkers während des Zusammendrückens des Lagerabschnitts;
Fig. 4c eine Draufsicht auf den Lagerabschnitt einer vierten, erfindungsgemäßen Ausführungsform des Fahrwerkslenkers nach Abschluss des Verfahrens.

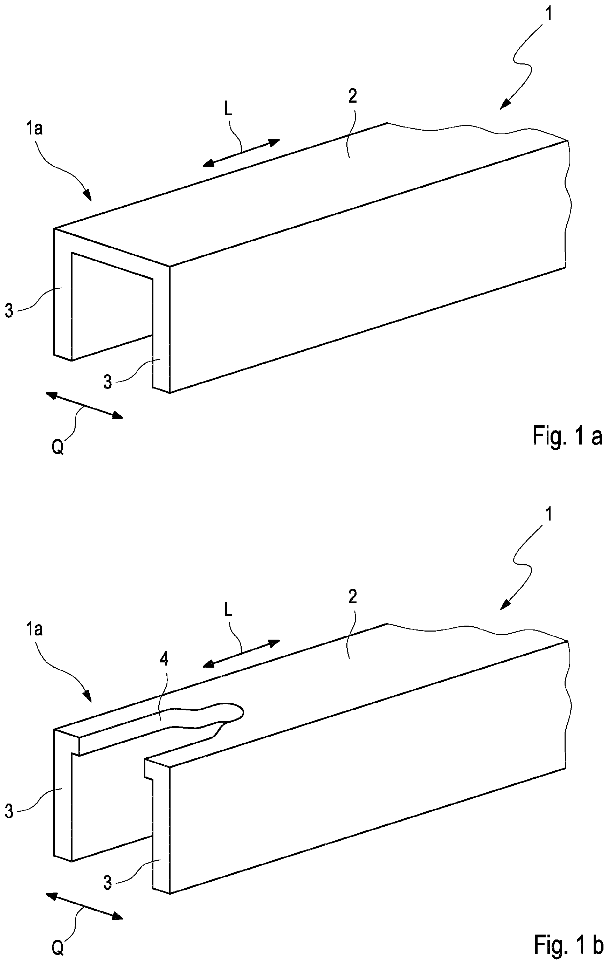

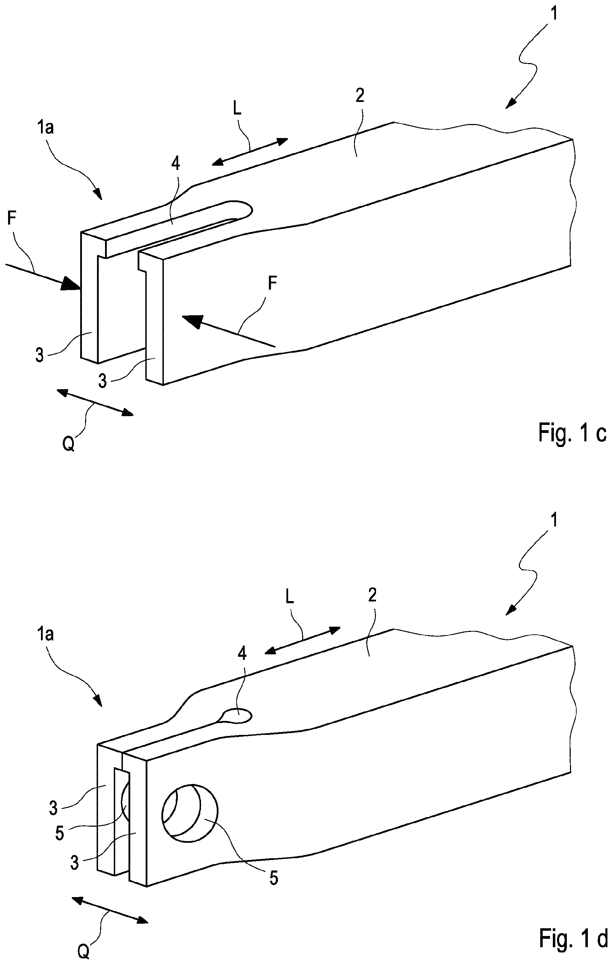

Gemäß der Fig. 1a bildet der Fahrwerkslenker 1 als Halbzeug ein Strangpressprofil in Form des Buchstabens "U" mit einem Bodensteg 2 als Basis und zwei davon unter Ausbildung eines dazwischenliegenden Freiraums im Wesentlichen rechtwinklig abstehenden Seitenstegen 3. Die räumliche Erstreckung des Fahrwerkslenkers 1 in Längsrichtung L ist deutlich größer als in Querrichtung Q. An beiden Enden in Längsrichtung L befindet sich ein Lagerabschnitt 1a, wobei vorliegend nur ein Ende dargestellt ist. Die Fig. 1b zeigt den Fahrwerkslenker 1 aus Fig. 1a nachdem eine Variante der Bearbeitungsöffnung 4 für eine erste, nicht unter den Patentanspruch fallende, Ausführungsform in den Lagerabschnitt 1a eingebracht wurde. Die Bearbeitungsöffnung 4 erstreckt sich in Querrichtung Q bis nahe an, jedoch nicht in, die Seitenstege 3. Die Fig. 1c zeigt den Fahrwerkslenker 1 aus Fig. 1b während des Zusammendrückens des Lagerabschnitts 1a. Dazu wird in Querrichtung Q beiderseits eine aufeinander gerichtete Kraft F auf den Lagerabschnitt 1a aufgebracht. Die Bearbeitungsöffnung 4 schmälert und verformt sich dadurch kontinuierlich. Die Fig. 1d zeigt den Fahrwerkslenker 1 aus Fig. 1c nach erfolgtem Zusammendrücken des Lagerabschnitts 1a und Einbringen der koaxial zueinander angeordneten Lageröffnungen 5 in die entsprechenden Seitenstege 3. Die Bearbeitungsöffnung 4 ist so weit verkleinert, dass sie über weite Bereiche geschlossen ist, also die in Querrichtung Q angrenzenden Abschnitte des Bodenstegs 2 sich berühren. Zur Verbesserung der Steifigkeit kann die Bearbeitungsöffnung 4 in diesem Zustand mit stoffschlüssigen Befestigungsmethoden wie Schweißen, Löten oder Kleben stabilisiert werden.

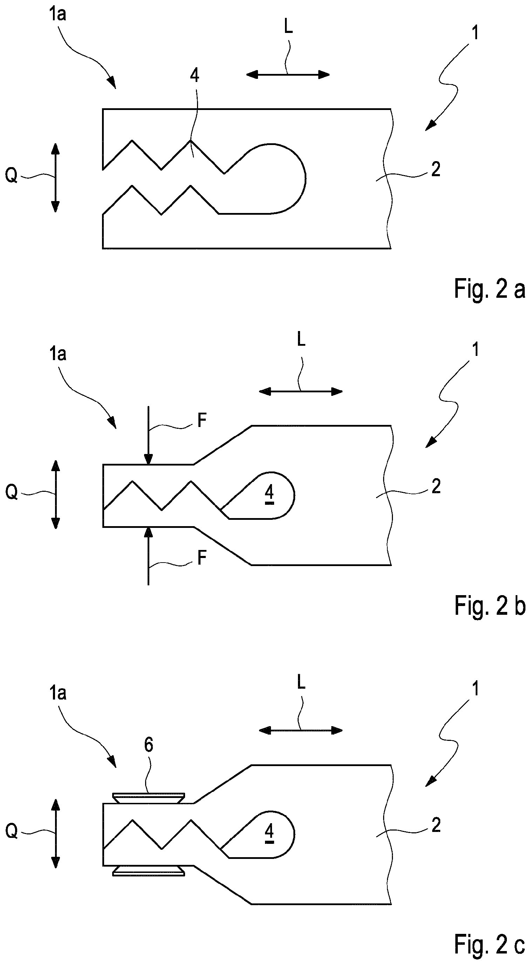

Die Fig. 2a zeigt eine nicht unter den Patentanspruch fallende Variante der Bearbeitungsöffnung 4 für eine zweite Ausführungsform, die im Lagerabschnitt 1a in den Bodensteg 2 eingebracht wurde. Wie in Fig. 2b ersichtlich, greifen die in Querrichtung Q sich an die Bearbeitungsöffnung 4 anschließenden Abschnitte des Bodenstegs 2, beim Zusammendrücken des Lagerabschnitts 1a mit einer Kraft F, abschnittsweise formschlüssig ineinander, wobei der Formschluss hauptsächlich in Längsrichtung L wirksam ist. In Fig. 2c ist der Fahrwerkslenker 1 nach Abschluss des Verfahrens gezeigt, wobei in die nicht dargestellten Lageröffnungen in den Seitenstegen 3 eine Lagerhülse 6 eingefügt und deren über die Seitenstege 3 hinausstehenden Enden umgebördelt wurden. Dies stabilisiert den Formschluss zusätzlich in Querrichtung Q.

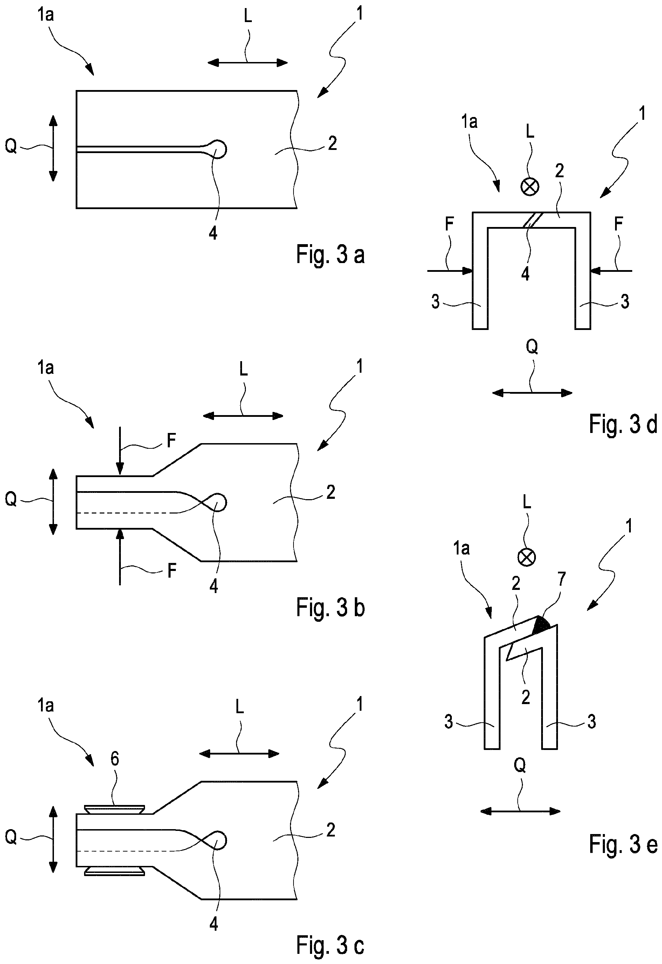

Die Fig. 3a zeigt eine nicht unter den Patentanspruch fallende Variante der Bearbeitungsöffnung 4 für eine dritte Ausführungsform, die im Lagerabschnitt 1a in den Bodensteg 2 eingebracht wurde. Wie in der Vorderansicht 3d zu erkennen, ist die Bearbeitungsöffnung 4 schräg ausgeführt, so dass sich zwei komplementär zueinander liegende schiefe Ebenen ergeben. Wie in Fig. 3b ersichtlich, schieben sich die in Querrichtung Q an die Bearbeitungsöffnung 4 anschließenden Abschnitte des Bodenstegs 2 beim Zusammendrücken des Lagerabschnitts 1a mit einer Kraft F abschnittsweise übereinander, was durch die schiefen Ebenen erleichtert wird. In Fig. 3e ist der Lagerabschnitt 1a nach erfolgtem Zusammendrücken gezeigt, wobei eine Schweißnaht 7 zur Stabilisierung eingezogen wurde. In Fig. 3c ist der Fahrwerkslenker 1 nach Abschluss des Verfahrens gezeigt, wobei in die nicht dargestellten Lageröffnungen in den Seitenstegen 3 eine Lagerhülse 6 eingefügt und deren über die Seitenstege 3 hinausstehenden Enden umgebördelt wurden.

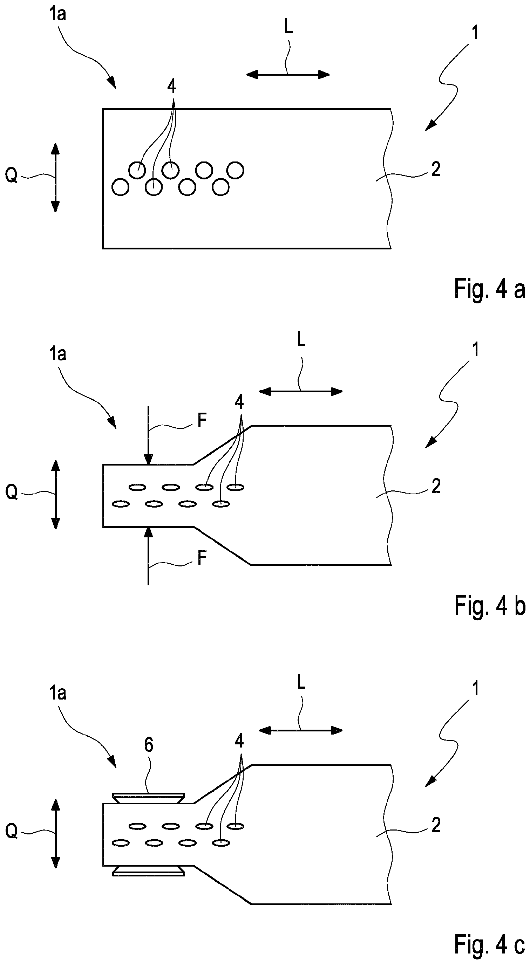

Die Fig. 4a zeigt einen Fahrwerkslenker 1 mit mehreren Bearbeitungsöffnungen 4, die im Lagerabschnitt 1a in den Bodensteg 2 eingebracht wurden. Die Bearbeitungsöffnungen 4 sind radial rundum vom Bodensteg 2 umgeben. Wie in Fig. 4b ersichtlich, schmälern sich die Bearbeitungsöffnungen 4 beim Zusammendrücken des Lagerabschnitts 1a mit einer Kraft F kontinuierlich. Ein vollständiges Schließen der Bearbeitungsöffnungen 4 wird bei dieser Ausführungsform aus verfahrenstechnischen Gründen kaum möglich bzw. auch nicht notwendig sein. In Fig. 4c ist der Fahrwerkslenker 1 nach Abschluss des Verfahrens gezeigt, wobei in die nicht dargestellten Lageröffnungen in den Seitenstegen 3 eine Lagerhülse 6 eingefügt und deren über die Seitenstege 3 hinausstehenden Enden umgebördelt wurden.

### Liste der Bezugszeichen:

- L: Längsrichtung
- Q: Querrichtung
- F: Kraft
- 1: Fahrwerkslenker
- 1a: Lagerabschnitt
- 2: Bodensteg
- 3: Seitensteg
- 4: Bearbeitungsöffnung
- 5: Lageröffnung
- 6: Lagerhülse
- 7: Schweißnaht

## Patentansprüche

1. Verfahren zur Herstellung eines Fahrwerkslenkers (1) für ein Fahrzeug, wobei der Fahrwerkslenker (1) als einstückiges Umformbauteil aus einem Strangpressprofil hergestellt wird, umfassend die nachfolgende Reihenfolge der Verfahrensschritte:
a) Bereitstellen eines Halbzeugs aus einem Strangpressprofil mit einem Bodensteg (2), von dem ausgehend mindestens zwei Seitenstege (3) unter Ausbildung eines dazwischenliegenden Freiraums abstehen;
b) Einbringen mindestens einer Bearbeitungsöffnung (4) in den Bodensteg (2) zwischen den Seitenstegen (3) in einem endständigen Lagerabschnitt (1a) des Fahrwerkslenkers (1), wobei mindestens eine der Bearbeitungsöffnungen (4) radial rundum von dem Bodensteg (2) umschlossen ist;
c) Zusammendrücken des Lagerabschnitts (1a) in Querrichtung (Q) des Fahrwerkslenkers (1) bis sich mindestens eine der Bearbeitungsöffnungen (4) zumindest abschnittsweise schließt;
d) Einbringen von koaxial zueinander angeordneten Lageröffnungen (5) in jeweils einen der Seitenstege (3) des Lagerabschnitts (1a).

2. Verfahren nach Anspruch 1, **dadurch gekennzeichnet, dass** mindestens eine der Bearbeitungsöffnungen (4) und/oder die Lageröffnungen (5) mit einem schneidtechnischen Bearbeitungsvorgang eingebracht werden.

3. Verfahren nach Anspruch 1 oder 2, **dadurch gekennzeichnet, dass** in einem sich an das Einbringen der Lageröffnungen (5) anschließenden Verfahrensschritt eine Lagerhülse (6) in die Lageröffnungen (5) eingebracht wird, deren über die Seitenstege (3) hinausstehenden Enden danach umgebördelt werden.

## Claims

1. Method for producing a suspension arm (1) for a vehicle, wherein the suspension arm (1) is produced as a single-piece forming component from an extruded profile, comprising the following sequence of method steps:
a) providing a semi-finished product from an extruded profile with a bottom rod (2), starting from which at least two side rods (3) protrude to form an intermediate clearance between the rods;
b) introducing at least one machining opening (4) into the bottom rod (2) between the side rods (3) in a terminal bearing section (1a) of the suspension arm (1), wherein at least one of the machining openings (4) is enclosed radially all around by the bottom rod (2);
c) compressing the bearing section (1a) in the transverse direction (Q) of the suspension arm (1) until at least one of the machining openings (4) at least partially closes;
d) introducing bearing openings (5) that are arranged coaxially to each other into one of the side rods (3) of the bearing section (1a) in each case.

2. Method according to claim 1, **characterised in that** at least one of the machining openings (4) and/or the bearing openings (5) are introduced with a cutting process.

3. Method according to claim 1 or 2, **characterised in that** in a method step subsequent to the introduction of the bearing openings (5), a bearing sleeve (6) is introduced into the bearing openings (5), the ends of which, protruding beyond the side rods (3), are thereafter flanged.

## Revendications

1. Procédé de fabrication d'un bras de suspension (1) pour un véhicule, dans lequel le bras de suspension (1) est fabriqué comme une pièce transformée d'une seule pièce à partir d'un profilé filé, comprenant la série d'étapes de procédé ci-dessous :
a) fourniture d'un produit semi-fini à partir d'un profilé filé avec une traverse de fond (2) de laquelle s'éloignent au moins deux traverses latérales (3) en formant un espace libre entre elles ;
b) réalisation d'au moins une ouverture d'usinage (4) dans la traverse de fond (2) entre les traverses latérales (3) dans un tronçon de support (1a) terminal du bras de suspension (1), au moins l'une des ouvertures d'usinage (4) étant entièrement entourée de façon radiale par la traverse de fond (2) ;
c) écrasement du tronçon de support (1a) dans la direction transversale (Q) du bras de suspension (1) jusqu'à ce qu'au moins l'une des ouvertures d'usinage (4) soit au moins partiellement fermée ;
d) réalisation d'ouvertures de support (5) agencées de manière coaxiale les unes par rapport aux autres à chaque fois dans l'une des traverses latérales (3) du tronçon de support (1a).

2. Procédé selon la revendication 1, **caractérisé en ce qu'**au moins une des ouvertures d'usinage (4) et/ou les ouvertures de support (5) sont réalisées avec une opération d'usinage par découpe.

3. Procédé selon la revendication 1 ou 2, **caractérisé en ce que**, dans une étape de procédé faisant suite à la réalisation des ouvertures de support (5), un manchon de support (6) est placé dans les ouvertures de support (5) dont les extrémités dépassant des traverses latérales (3) sont ensuite rabattues.
